# EUROPEAN PATENT SPECIFICATION

(11) **EP 0 410 662 B1**
(45) Date of publication and mention of the grant of the patent: **26.10.1994**
(21) Application number: 90308027.3
(22) Date of filing: 23.07.1990
(51) Int. Cl.: C04B 16/08, C04B 40/06, C04B 28/02

(54) **Cementitious compositions containing shredded polystyrene aggregate**
Ein zerkleinertes Polystyrol-Aggregat enthaltende Zementzusammensetzungen
Compositions de ciment contenant un agrégat de polystyrène fragmenté

(30) Priority: 25.07.1989 US 384941
(43) Date of publication of application: 30.01.1991
(73) Proprietor: W.R. Grace & Co.-Conn., New York, New York 10036 (US)
(72) Inventor: Hilton, Dennis M., Londonderry, New Hampshire 03053 (US); Korenberg, Paul E., Carlisle, Massachusetts 01741 (US)
(74) Representative: Lawrence, Peter Robin Broughton

(56) References cited:
- EP-A- 0 241 205
- CH-A- 517 051
- DE-A- 2 227 188
- DE-A- 2 449 385
- US-A- 3 686 068
- US-A- 4 100 242
- WORLD PATENTS INDEX LATEST Week 8240, Derwent Publications Ltd., London, GB; AN 82-84848E & JP-A-57 140 360 (S. HATTORI) 30 August 1982
- CHEMICAL ABSTRACTS, vol. 93, no. 10, 8 September 1980, Columbus, Ohio, US; abstract no. 100498G, page 324 ; and JP-A-55020283 (TERADA KENZAI K.K.) 13 February 1980

## Description

In the course of erecting steel structures, a thick coating of inorganic material is commonly applied to the metallic structural elements to achieve a number of objectives including fire retardance, improved appearance and sound deadening. While several types of formulations have been applied for these purposes over the years by means of a variety of techniques, one successful system consists of spraying on to the steel surfaces settable aqueous mixes composed essentially of calcined gypsum, a lightweight inorganic aggregate material such as exfoliated vermiculite, a mixture of fibrous materials such as a high wet bulking cellulose fibre and glass fibre, and an air entraining agent. A composition of this type is described by Bragg in U.S. Patent Nos.3,719,513 and 3,839,059, along with the most desirable application technique, i.e., pumping the aqueous mix and spraying it directly on to the steel in one layer.

In order to be suitable for such use, coating mixes, both in the wet and dry state, must possess a number of crucial properties. They must be able to hold the large quantity of water that renders them capable of being pumped easily and to great heights. Yet they must retain a consistency sufficient to prevent segregation or settling of ingredients and permit adequate "yield" or coverage of the steel surface at a given thickness. the coating mixes, furthermore, must obviously adhere to steel surfaces, both in the slurried state and in the dry state. Also, the mix must set without the undue expansion or shrinkage which could only result in the formation of cracks that would seriously deter from the insulative value of the dry coating.

As intimated earlier, this complex balance of properties has been substantially achieved heretobefore by gypsum-vermiculite mixes containing cellulosic fibre. However, vermiculite is a naturally occurring mineral which is subject to variation in quality, consistency, and uniformity. Moreover, since the vermiculite mineral must be expanded at very high temperatures prior to use, its cost is subject to unpredictable variations in energy cost.

An alternative to the gypsum-vermiculite mixes is disclosed in U.S. Patent No.4,751,024 assigned to the assignee of the instant invention. Specifically, sprayable cementitious compositions containing shredded polystyrene as a lightweight aggregate are taught as fireproofing compositions for structural steel members.

A composition that is suitable for use as, or for making, a settable sprayable composition comprises cementitious binder and shredded polystyrene aggregate characterised in that the shredded polystyrene has a particle size distribution such that a range of about 0 to about 20 percent by weight of the particles is retained by a sieve having a hole size of about 1.68mm and a maximum of about 40 percent by weight of the particles passes through a sieve having a hole size of about 0.59mm and is retained by a sieve having a hole size of about 0.044mm.

The sieve having a hole size of about 1.68mm is a standard No.12 sieve (hole size 0.0661 inches). The sieve having a hole size of about 0.59mm is a standard No.30 sieve (hole size 0.232 inches) and the sieve having a hole size of about 0.044mm is a standard No.325 sieve.

The invention includes a dry composition containing a hydratable binder, its use for forming a sprayable and settable slurry that will form an adherent coating on a steel structural member, the slurry, the method of applying the slurry, and the resultant coatings and coated articles.

We have found that uniform consistency and quality of the compositions, defined in terms of pumpability, hangability and yield, can be achieved by the defined choice of the size distribution of the shredded expanded polystyrene in the product. That is, it has been found that the degree of expanded polystyrene "shreddedness" effects the water ratio bulk density, the pumpability and the yield of the cementious compositions. The adhered compositions provide excellent fire and heat insulative protection to the steel despite the organic nature of the polystyrene aggregate. Under fire test conditions, the polystyrene aggregate displays advantageous performance in that it shrinks, melts, and, in effect, disappears out of the fireproofing composition matrix, leaving behind a uniform distribution of cavities which imparts a very low effective thermal conductivity to matrix. This, in turn, increases the effectiveness of the matrix as a barrier to heat transfer.

A number of manufacturing parameters must be controlled in order to obtain shredded expanded polystyrene within the particle size distribution limits of the present invention. A particle size distribution including too many fine or too many coarse shredded expanded polystyrene particles reduce the desirable characteristics of the compositions. The important parameters include: the degree of fusion in the expanded polystyrene board used as a starting material for the aggregate; the rate at which the board is fed into the shredder; the shredding rotor speed; the roughness of the brushes on the shredder; and the tolerance between the brushes. Faster than optimal rotor speed and/or slower than optimal feed rates will produce a shredded expanded polystyrene product that is too fine. In contrast, slower than optimal rotor speeds and/or faster than optimal feed rates will produce a coarse product. Poor quality expanded polystyrene board, that is, board having a low degree of fusion, will produce a coarser, "beady" shredded expanded polystyrene product that detracts from the advantages of the present invention.

Preferably the compositions also comprise an air entraining agent. Preferably the compositions contain a fibre component. Preferably the shredded polystyrene (and fibre if present) is substantially the only aggregate in the composition. The polystyrene is preferably expanded polystyrene.
Figure 1 is a side view of a shredder box for shredding expanded polystyrene to a size distribution in accordance with the present invention;
Figure 2 is a front view of an agitator cap for use in determining the particle size distribution of a sample;
Figures 2a, 2b and 2c are schematics of the apparatus for use in determining the particle size distribution of a sample;
Figure 3 is a top view of a portion of the apparatus for use in determining the particle size distribution of a sample;
Figure 4 is a diagrammatic view of the gas supply line used in connection with the apparatus for determining the particle size distribution of a sample; and
Figure 5 is a graph depicting a size distribution of shredded expanded polystyrene in accordance with the present invention.

The aggregate used in the present compositions is a shredded polystyrene particle which can be produced by shredding loose expanded polystyrene beads, shredding loose expanded polystyrene "peanuts" (packing insulation), shredding moulded polystyrene beadboard, or shredding extruded polystyrene. A method and apparatus for shredding foamed polystyrene are disclosed in U.S. Patent Nos.3,627,211 and 3,686,068, the disclosure of which is expressly incorporated by reference herein. As disclosed in these patents, the shredded particles have irregularly shaped exterior surfaces, tears, and ragged edges. The shredding process opens a substantial number of the cells on the surface of the foamed beads, thereby allowing penetration of the cementitious binder into the cellular structure and providing a more integral mix between the binder and the particle.

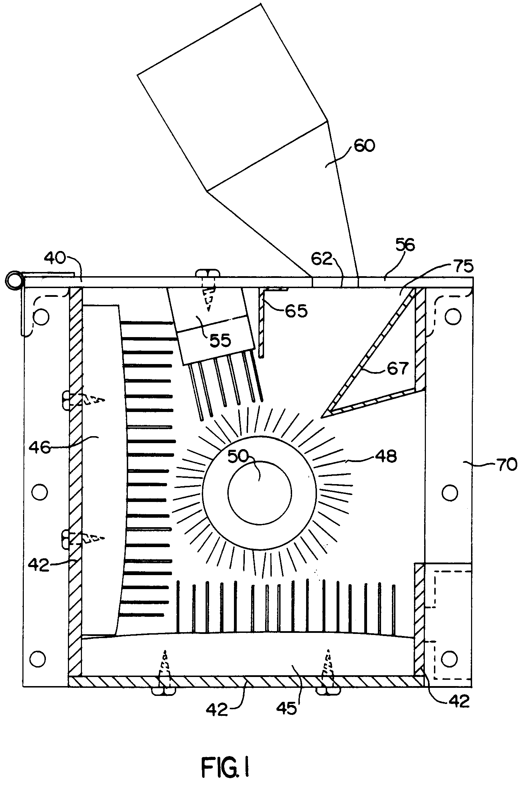

A particularly suitable shredder for the present invention can be described with reference to Figure 1. A shredder box 40 is shown defining a chamber 75 which houses support plates 42. Round wire brushes are mounted on a shaft and fastened to the shaft with an adhesive. The assembly is mounted on a lathe and the outside diameter is ground to a uniform diameter; that is, the odd length bristles are cut down and a light cut on all bristles is made. The depth of cut on this trim is about 5.1mm. This grind results in a "set" in the bristles.

The rotor brush 48 is then mounted on shaft 50 in box 40. A measurement establishing the distance of the rotor arc from the bottom and back wall of box 40 is established. Stator brushes 45, 46 are then shaped to suit this arc creep grinding using a surface grinder. Rotor brush 48 is removed from box 40, the stator brushes 45, 46 are mounted on support plates 42 by suitable means, such as adhesive and/or lag screws, and the rotor brush 48 is again mounted on shaft 50.

Rotor brush 48 is strategically positioned with respect to stator brushes 45, 46 so as to provide the desired particle size distribution of the shredded material. The tolerance between the rotor and stator brushes can be determined by any suitable means, such as by measuring the torque required to rotate the rotor brush 48. Specifically, the motor (not shown) driving shaft 50 is started and the current draw on the motor is measured. If there is significant contact between the rotor and stator brushes, the current will be high. In such a case, the rotor brush 48 can be removed and the stator brush bristles can be trimmed with a hand-held grinder. The procedure can be repeated until the desired tolerance between the rotor brush 48 and stator brushes 45, 46 is obtained. Preferably there is little or no contact between the rotor and stator brushes.

Once the current is at the proper level, i.e., little or no load, expanded polystyrene is fed through feed rolls (not shown) at an established rate, and the current draw by the motor is again observed. If the current exceeds an established level, the shredder is stopped and the "set" in the rotor brush bristles is relieved. This can be accomplished by hand-filing the bristles while manually turning the rotor brush 48 slowly in the operational direction of rotation. This procedure is carried out across the entire length of the rotor.

The shredder is qualified by three separate expanded polystyrene runs. Shredded expanded polystyrene from each run is sampled and the particle size distribution measured as discussed below. If the measurements meet the established particle size distribution requirements, the shredder is qualified. If the measurements fail to meet the particle size distribution criteria, the "set" of the rotor brush 48 can be readjusted.

Additional wire brushes are provided at 55 and shown mounted on top plate 56 by a lag screw. The bristles of the brush 55 extend down so they are in close proximity to the rotor brush 48. Its function is to prevent chunks of expanded polystyrene from reaching the discharge aperture 62 before they have been shredded appropriately. Suction means 60 such as a hood is provided in communication with the chamber 75 via an aperture 62 in top plate 56. The suction means 60 is connected to the suction side of a materials handling centrifugal fan (now shown), and withdraws the particles shredded by the aforementioned wire brushes. Deflector plates 65 and 67 help direct the shredded particles toward suction means 60. Deflector plate 67 also serves to prevent shredded particles from interfering with raw material being fed to the shredder box 40 through feed aperture 70.

Suitable particle size distributions of shredded expanded polystyrene in accordance with the present invention can be expressed in terms of the amount of particles retained on a #12 standard sieve (having 1.679mm holes), and the amount of particles passing through a #30 (0.594mm) sieve and retained on a #325 (0.0432mm) sieve. A #16 (having 1.19mm holes) sieve can also be used between the #12 (1.679mm) and #30 (0.594mm) sieves. Suitable amounts of particles retained on a #12 (1.679mm) sieve, expressed as a weight percent, are from about 0 to about 20%, with from about 0 to about 10% being preferred, and less than about 8% being especially preferred. Suitable amounts of particles passing through a #30 sieve (having 0.594mm holes) and retained on a #325 sieve (having 0.0432 mm holes) are less than about 40% by weight, preferably less than about 30% by weight, with about 14-20% being especially preferred. The desired amount of particles retained by the #12 (1.679mm holes) sieve depends in part on the amount of particles passing through the #30 (0.594mm holes) sieve and retained by the #325 (0.0432mm holes) sieve. Where the amount of particles retained by the #12 (1.679mm) sieve is less than about 8 percent by weight, it is preferred that the amount of particles passing through the #30 (0.594mm) sieve and retained by the #325 (0.0432mm) sieve is less than about 30% by weight.

Table 1 illustrates the effects of the particle size distribution of shredded expanded polystyrene on the fireproofing performance.

| Batch # | Weight % Retained on 1.679mm holes (#12 Sieve) | Weight % 0.594mm holes (Through #30) Sieve and Retained on 0.0432mm holes (#325 Sieve) | R Value (Water/Dry Fireproofing) | Yield m/kg (Board ft/lb Fireproofing) |
|---|---|---|---|---|
| 1 | 5.3+/-1.2 | 19.5+/-1.5 | 1.45 | (0.604) 0.405 |
| 2 | 14.3+/-2.6 | 14.6+/-2.9 | 1.35 | (0.572) 0.384 |
| 3 | 21.8+/-2.0 | 14.6+/-2.1 | 1.25 | (0.545) 0.366 |
| 4 | 6.9+/-0.7 | 65.2+/-1.0 | 1.10 | (0.383) 0.257 |

In batch numbers 1-3, the quantity of fine particles (as expressed by the weight percent passing through the #30 (0.594mm) sieve and retained on the #325 (0.0432mm) sieve) was kept at the same general order of magnitude, while the quantity of coarse particles (as expressed by the weight percent retained on the #12 (1.67mm) sieve) was increased. Batch number 1 demonstrated the best overall performance, with the highest R value and yield. Batch numbers 2 and 3, with an approximately three-fold and four-fold increase in coarse particles, respectively, showed decreases in R value and yield.

In batch number 4, the quantity of fine particles was increased substantially to fall outside the scope of the present invention, while the amount of coarse particles approximated the amount of batch number 1. The resulting composition retained very little water (R value of 1.10) and exhibited poor yield. The use of any less water in an attempt to increase yield would render the material not pumpable.

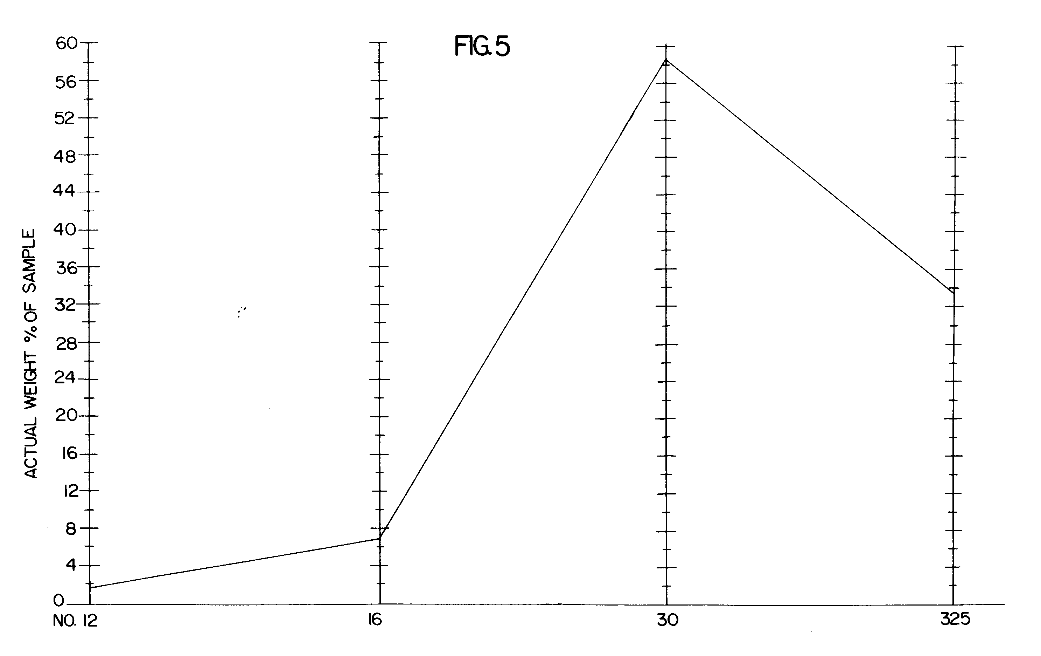

Turning now to Figure 5, there is shown an example of a particle size distribution curve for a 20gm sample. The weight percent shown is based on the 20g sample plus approximately 16 grams of anti-static solution (resulting in about 4 grams of solid) added for purposes described below. The weight percent retained on the #12 (1.679mm) screen was 1.5%. The weight passing through the #30 (0.594mm) screen and retained on the #325 (0.0432mm) screen was 33.4%. The performance of the composition comprising such a particle size distribution of shredded expanded polystyrene was good.

As mentioned previously, a number of parameters must be controlled to obtain the particle size distribution of shredded expanded polystyrene in accordance with the present invention. The degree of fusion of the expanded polystyrene board affects the shredding and the particle size distribution of the shredded particles. If the beads used to form the board are too weakly fused, the shredding operation will not tear the expanded polystyrene, but instead will merely separate the beads from one another. This will produce a coarser, "beady" product falling outside the particle size distribution contemplated in the present invention.

The rate at which the expanded polystyrene board is fed into the shredder the volume of the board (i.e., its thickness), and the rotor brush diameter also affects the particle size distribution of the resulting shredded expanded polystyrene. Too fast a feed rate will result in too coarse a product, whereas too slow a feed rate will result in too fine a product. A feed rate in the range of from about 140 cubic inches (2.29ℓ) of board inches and a rotor brush speed of about 4400rpm has been found to produce a particle size distribution within the scope of the present invention.

Also affecting the particle size distribution of the shredded expanded polystyrene board is the tolerance between the stator brushes and the rotating brushes, and the relative speed of the brushes. If too large a gap is present between the stator and rotating brushes or if the rotor brushes rotate at too slow a speed, too coarse a product will result. In contrast, if too small a gap exists between the brushes, or if the rotor brushes rotate at too fast a speed, too fine a product will result.

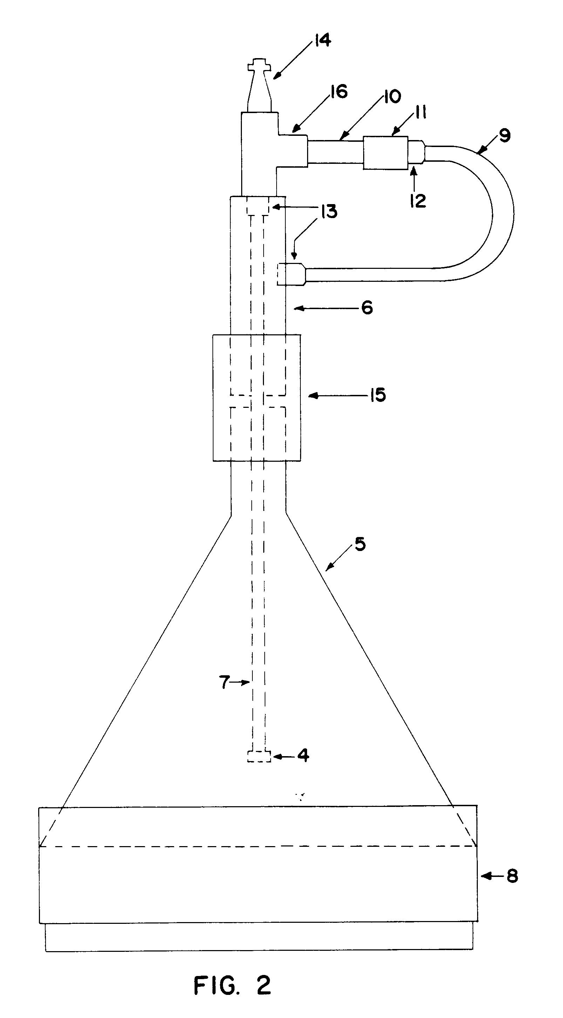

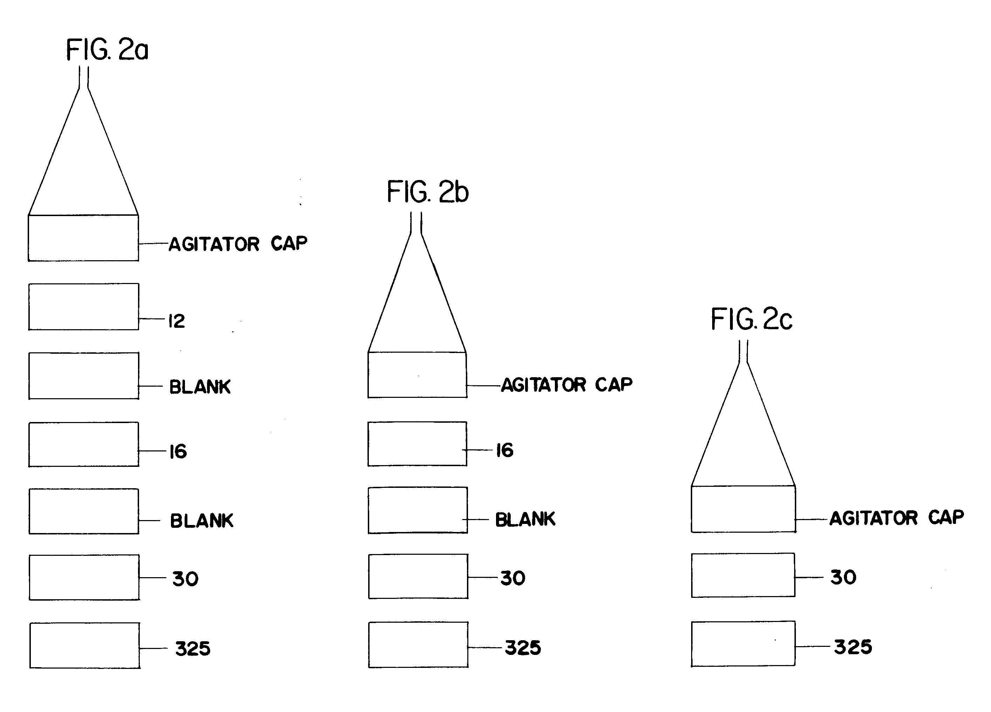

Turning now to Figure 2, there is shown an agitator cap assembly which forms part of the apparatus used for measuring the particle size distribution of a given sample of lightweight expanded polymer. The assembly includes a conical portion 5 such as an inverted 203mm Nalgene funnel. The funnel communicates with gas supply means via tubing 6, such as 19.1mm PVC pipe, attached to the funnel with coupling 15. A gas such as air is driven from the gas supply means through a quick disconnect mechanism 14, a 3.2mm NPT (normal pipe thread) tee 16, and tubing 6 into the chamber means to create a downward draft. The mechanism 14 comprises a male fitting coupled to the tee 16 and a female fitting for connection to the gas supply line (not shown). The mechanism 14 allows for easy and quick connection/disconnection between the agitator cap assembly and the air supply, without the use of tools and without turning off the gas pressure. The assembly also includes means to agitate the sample, such as the gas emitted from a flexible gas driven packing on to the screen of sieve 8. The tube 7, preferably formed of latex rubber, should be positioned about 76.2mm above the screen to optimise the agitation of the sample. A weight 4 of about 6.6 grams can be attached to tube 7 to achieve superior agitation.

The downward draft forces particles loosened by the agitation tube 7 through the screen of sieve 8. The gas supply for the downward draft can be tapped off the main supply (which also communicates with tube 7) via a bypass loop 9, which also can be latex tubing. Incorporated in this loop is means to automatically regulate the correct gas pressure and flow rate through the bypass loop, such as a specially designed 3.2mm close nipple 10 having an inside diameter of 2.38mm. The nipple is made from a 3.2mm by 19.1mm NPT close nipple by thoroughly cleaning and degreasing the nipple in a solvent such as acetone. The nipple is then filled with epoxy. When cured, a 2.38mm diameter hole is drilled in the centre of the epoxy, and carefully cleaned out to remove any loose particles without enlarging the hole. The nipple 10 is connected to bypass loop 9 via coupling means 11 and connector means 12. A similar connector means 13 connects the loop 9 to the piping 6.

Gas pressure, flow rate and duration time are critical factors that must be controlled for the apparatus to function optimally. The gas supply pressure and flow rate must be set so as to create a sufficient downward draft to force appropriate particles that can pass through the filtering or size segregating means, such as sieves, to do so, as well as to provide sufficient pressure to the tubing 7 to cause it to randomly move to create enough turbulence in the conical portion rate of about 4.9-5.0cfm (0.139-0.142 m³/min.) is preferred for a 20 gram sample of shredded expanded polystyrene. A time duration of at least about four minutes is preferred for each sieve to provide an accurate, reproducible representation of the particle size distribution of the 20g sample. A 20g sample has been found to be representative of a 360lb billet (163 kg).

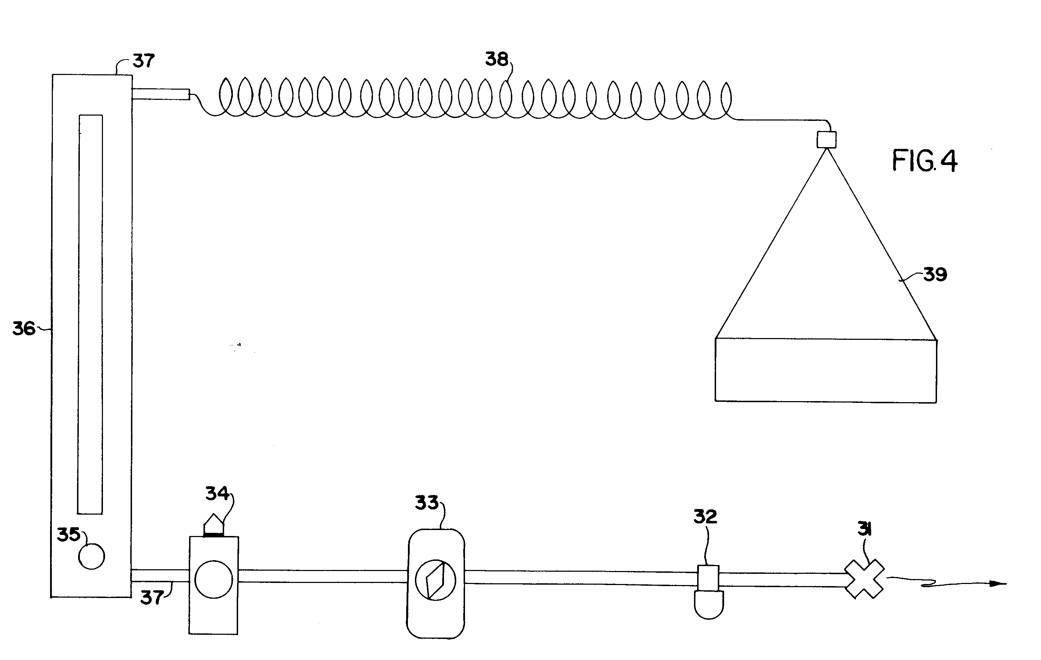

Figure 4 shows the various elements that can be used in conjunction with the agitator cap assembly to achieve the correct parameters. A valve 31 of any suitable well known type is shown for quick start or termination of pressure to the system. A filter 32 is downstream from valve 31, and removes contaminates such as oil leaked from the gas supply source such as an air compressor (not shown). Such contaminates may have a deleterious effect on other elements in the system, as well as on the separation results. Filter 32 also helps in removing moisture from condensation from the system. If too much moisture is present for the filter 32 to handle, an air dryer (not shown) can be used. A solenoid valve and timer 33 serves to automate the duration of the particular run. Pressure regulator 34 regulates the gas supply pressure to the desired level, and is equipped with a pressure gauge capable of withstanding the desired operating pressure. A stainless steel needle valve 35 to vary the gas flow rate is built into flowmeter 36. The flowmeter 36 is connected to the line by 6.35mm NPT fittings as its entrance and exit. A 6.35mm nylon coil hose 38 is connected to the agitator cap 39, and allows for freer movement of agitator cap 39.

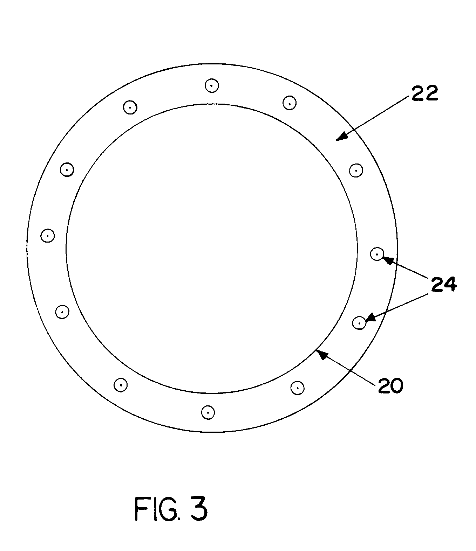

The preferred procedure for determining the particle size distribution of a given sample is as follows. The agitator cap assembly is connected to air supply means (devoid of moisture) set at a pressure of 50-51psi (3.37-3.44 kg/cm²) and a flow rate of 4.9-5.0scfm (0.139-0.142 m³/min). As shown in Figure 2a, the assembly is placed in communication with a tared #12 (1.679mm) sieve. Under the #12 (1.679mm) sieve is placed a blank (a sieve with the screen removed) to accommodate the volume of sample used. A tared #16 (1.19mm) sieve is placed under the blank, and in turn is followed by a second blank, a tared #30 (0.594mm) sieve, and a tared #325 (0.0432mm) sieve. Typically no blank is required between the #30 (0.594mm) and #325 (0.0432mm) sieves, as the sample volume has been sufficiently reduced by retention on previous screens. The entire sieve pack is then placed on a suitable receptacle which can receive any particles passing through the last sieve as well as allow the flow of air therethrough. Figure 3 shows a top view of such a receptacle having an aperture 20 through which air and particles can pass. The assembly sits on a portion of surface 22, but does not cover holes 24. Holes 24 allow air passing into the receptacle from the assembly to escape.

A suitable sample is weighed. A suitable anti-static agent, such as a solution of 80% propanol and 20% silicone/glycol, can be added to the sample to reduce the static electricity of the lightweight expanded polymer that would otherwise build as a result of th constant agitation of the polymer. It is believed that the solution forms a thin layer on the particles without causing any detrimental particle deformation. The agitator cap is removed from the sieve pack, inverted, and the conical portion 5 is filled with the sample. The #12 sieve is then removed from the sieve pack and placed over the wide mouth of the conical portion 5 of the agitator cap so as to act as a cover. The conical portion 5, the sample, and the #12 (1.679mm) sieve are placed back on the sieve pack. Air supply is commenced at a pressure of 50-51psi (3.37-3.44 kg/cm²) and a flow rate of 4.9-5.0scfm (0.139-0.142 m³/min), and maintained for about at least four minutes. The air supply is then ceased, the conical portion 5 removed, and the weight of the sample retained on the #12 (1.679mm) sieve is determined. The procedure is repeated for the #16 (1.19mm) sieve as shown in Figure 2b, and for the #30 0.594mm) and #325 (0.0432mm) sieves as shown in Figure 2c. The procedure need not be applied to the #325 (0.0432mm) sieve directly, as the measurement of concern is the amount of sample passing through the #30 (0.594mm) sieve and retained on the #325 (0.0432mm) sieve. The amount of sample passing through the #325 (0.0432mm) sieve is negligible for the present purposes. The amount of material retained on the #16 (1.19mm) sieve is not critical.

It is known to shred foam particles and mix the shredded particles with a granulate slurry wherein the granular material may comprise cement particles, sand, gypsum particles and the like. As disclosed, for example, in U.S. Patent Nos.3,630,820 and 4,100,242, if a sufficient number of the cells are penetrated by the slurry, the buoyancy of the particles becomes decreased such that the high viscosity of the slurry prevents the particles from rising.

In the pumpable compositions of this invention containing expanded polystyrene, it has been found that use of shredded particles is essential since it leads to decreased buoyancy of the particles and this is essential for satisfactory conveyance of the compositions through the pump mechanism and feed lines to the point of application. In contrast, non-shredded beads segregate within the slurry and the resultant localised concentration of beads can clog the pump, feed lines, and spray nozzle.

The shredded polystyrene particles are preferably employed in a weight concentration of about 1% to about 5%, based on the total weight of the composition before water addition. (Unless otherwise stated, all weight percentages given herein are similarly based). These concentrations are preferred for providing pumpable, non-segregating, uniform slurries which display desired levels of adhesion to steel substrates and provide excellent fire protection. In addition, the density of slurry compositions containing concentrations of shredded polystyrene within this weight range is sufficiently low after application to ensure that the coating stays in place before and after setting. Thus, "fall-off" of the applied composition due to inadequate adherence or mechanical and structural disturbance is minimised or eliminated.

The density of the shredded polystyrene is preferably in the range of about 0.2 to 0.6 pounds per cubic foot, more preferably about 0.3 to 0.5pcf (4.81 to 8.02 kg/m³). Preferably, the particle size at its maximum dimensions is less than 6.35mm.

Portland cement can be used as the cementitious binder of the invention. However, it is generally preferred to employ a gypsum binder due to its advantageous fireproofing performance. Although the gypsum can be used in relatively low amounts, e.g., as little as 60% by weight, it is generally preferred to employ at least 75% by weight, based on the total weight of the composition, and more preferably at least about 85% by weight.

The fibrous component in the preferred compositions can be either organic or inorganic. Preferably, the fibrous component is a mixture of a high wet bulking organic fibre, preferably cellulose fibre as described in U.S. Patent Nos.3,719,513 and 3,839,059, and an inorganic fibre which provides reinforcement, preferably glass fibre. The total amount of the fibrous component in the composition is preferably in the range of about 4% to 20% by weight. A particularly preferred composition comprises about 4% to 10% by weight of high wet bulking cellulosic fibre and about 0% to 2%, most preferably 0.1% to 2%, by weight of glass fibre. It has been found that these particularly preferred fibre loadings, coupled with the preferred loading of about 1% to 5% by weight of shredded polystyrene particles, provides an optimum composition for easy pumping without segregation and for placement in high yield, i.e., placement over a relatively large area, per weight of the dry composition, at a given thickness of application. Yield is generally calculated by methods known in the art as board feet per dry weight of composition. The particularly preferred compositions are capable of providing a high yield of at least about 20 board feet per 45 pounds (6.1 board metres per 20 kg) by weight of the dry composition. Generally, a yield in the range of about 25 to 35 board feet per 45 pounds (7.6-10.7 board metres per 20 kg) dry weight is obtained.

The foaming agents or air entraining agents that can be used in the compositions of the invention are well known in the art. Such well known materials as sodium alpha olefin sulfonates, sulfonated monoglycerides, sodium alkyl arylsulfonate, and sodium laurel sulfate can be used in appropriate quantities to provide a slurry of desired density and pumpability. Dry foaming agents can be incorporated into the dry composition before addition of water, while both dry and liquid agents can be added to the slurried composition. Preferred amounts of the air entraining agent are about 0.1% to 0.5% by weight. The combination of air entrainment and shredding of the polystyrene is especially advantageous for providing homogeneity to the slurry, i.e., preventing segregation of the aggregate, for the period of time necessary for pumping, spraying and setting of the slurry.

In certain instances it is also desirable to incorporate into the mix a water retaining agent which allows more water to be incorporated into the slurry, thereby increasing pumpability and yield, while retaining about the same level of adhesion to steel. A preferred water retaining agent is hydroxypropylmethylcellulose.

The dry compositions of this invention are converted to pumpable slurries by addition of water. Generally, the water is added to the dry mix at the job site shortly before being pumped to the point of application. A water:cementitious binder ratio of about 1.0-1 to 2.5:1 is generally employed to provide a pumpable mixture of desired consistency and adhesiveness. A preferred ratio is about 1.2-2.0:1. Generally, a useful range of slurry density, which affords easy pumping, is about 35pcf to 55pcf (561-882 kg/m³).

## Claims

1. A dry composition comprising a hydratable cementitious binder and shredded polystyrene aggregate characterised in that the shredded polystyrene has a particle size distribution such that a range of about 0 to about 20 percent by weight of the particles is retained by a sieve having a hole size of about 1.68mm and a maximum of about 40 percent by weight of the particles passes through a sieve having a hole size of about 0.59mm and is retained by a sieve having a hole size of about 0.043mm.

2. A composition according to claim 1 wherein the particle size distribution of the aggregate is such that less than about 8 percent by weight of the particles are retained by a sieve having a hole size of about 1.68mm.

3. A composition according to claim 2, wherein the particle size distribution of the aggregate is such that less than about 30 percent by weight of the particles passes through a sieve having a hole size of about 0.59mm and are retained by a sieve having a hole size of about 0.043mm.

4. A composition according to any preceding claim wherein the polystyrene aggregate is shredded expanded polystyrene beads, shredded polystyrene beadboard, shredded polystyrene packing insulation, or shredded extruded polystyrene.

5. A composition according to any preceding claim wherein the polystyrene ha.s a density in the range of about 0.2 to 0.6pcf (3.2 to 9.6 kg/m³).

6. A composition according to any preceding claim comprising about 1% to 5% by weight of the polystyrene.

7. A composition according to any preceding claim further comprising a fibrous component.

8. A composition according to claim 7 wherein the fibrous component comprises an organic fibrous material and an inorganic fibrous material.

9. A composition according to claim 7 or claim 8 wherein the fibrous component comprises a high wet bulking organic fibre, preferably cellulose.

10. A composition according to any of claims 7 to 9 wherein the fibrous component comprises an inorganic fibrous material, preferably glass fibre.

11. A composition according to claim 7 comprising about 4% to 10% by weight of high wet bulking cellulose fibre and about 0% to 2% by weight of glass fibre.

12. A composition according to any preceding claim further comprising an air entraining agent.

13. A composition according to any preceding claim further comprising a water retaining agent, preferably hydroxypropylmethylcellulose.

14. Use of a composition according to any preceding claim for forming, upon addition of water, a settable slurry which is capable of spray application to a steel structural member and which, after spray application is adherent to the member in the slurried state and after setting, said slurry, after setting, forming a fire and heat protective adherent coating on the member.

15. A slurry formed upon the addition of water to the composition according to any of claims 1 to 13, said slurry having a density in the range of 35pcf to 55pcf (561-882 kg/m³).

16. A slurry according to claim 15 providing, after spray application, an in place yield of at least about 6.1 board metres per 20.4kg of said dry composition.

17. A fireproofed steel structural member comprising a steel structural member coated with a slurry according to claim 15 or claim 16.

## Patentansprüche

1. Trockenzusammensetzung, die hydratisierbares, zementartiges Bindemittel und zerkleinertes Polystyrolaggregat umfaßt, dadurch gekennzeichnet, daß das zerkleinerte Polystyrol eine solche Teilchengrößeverteilung aufweist, daß ein Bereich von etwa 0 bis etwa 20 Gew.-% der Teilchen von einem Sieb mit einer Lochgröße von etwa 1,68 mm zurückgehalten wird und ein Maximum von etwa 40 Gew.-% der Teilchen durch ein Sieb mit einer Lochgröße von etwa 0,59 mm läuft und von einem Sieb mit einer Lochgröße von etwa 0,043 mm zurückgehalten wird.

2. Zusammensetzung nach Anspruch 1, bei der die Teilchengrößeverteilung des Aggregats derart ist, daß weniger als etwa 8 Gew.-% der Teilchen von einem Sieb mit einer Lochgröße von etwa 1,68 mm zurückgehalten werden.

3. Zusammensetzung nach Anspruch 2, bei der die Teilchengrößeverteilung des Aggregats derart ist, daß weniger als etwa 30 Gew.-% der Teilchen durch ein Sieb mit einer Lochgröße von etwa 0,59 mm laufen und von einem Sieb mit einer Lochgröße von etwa 0,043 mm zurückgehalten werden.

4. Zusammensetzung nach einem der vorhergehenden Ansprüche, bei der das Polystyrolaggregat aus zerkleinerten, expandierten Polystyrolkügelchen, zerkleinerter Platte aus Polystyrolkügelchen, zerkleinerter Polystyrolverpackungsisolierung oder zerkleinertem, extrudiertem Polystyrol besteht.

5. Zusammensetzung nach einem der vorhergehenden Ansprüche, bei der das Polystyrol eine Dichte im Bereich von etwa 0,2 bis 0,6 pcf (3,2 bis 9,6 kg/m³) aufweist.

6. Zusammensetzung nach einem der vorhergehenden Ansprüche, die etwa 1 bis 5 Gew.-% Polystyrol umfaßt.

7. Zusammensetzung nach einem der vorhergehenden Ansprüche, die ferner eine faserige Komponente umfaßt.

8. Zusammensetzung nach Anspruch 7, bei der die faserige Komponente organisches, faseriges Material und anorganisches, faseriges Material umfaßt.

9. Zusammensetzung nach Anspruch 7 oder Anspruch 8, bei der die faserige Komponente eine naß gut quellende, organische Faser, vorzugsweise Cellulose umfaßt.

10. Zusammensetzung nach Anspruch 7 bis 9, bei der die faserige Komponente anorganisches, faseriges Material, vorzugsweise Glasfaser umfaßt.

11. Zusammensetzung nach Anspruch 7, die etwa 4 bis 10 Gew.-% naß gut quellende Cellulosefaser und etwa 0 bis 2 Gew.-% Glasfaser umfaßt.

12. Zusammensetzung nach einem der vorhergehenden Ansprüche, die ferner ein porenbildendes Mittel umfaßt.

13. Zusammensetzung nach einem der vorhergehenden Ansprüche, die ferner ein Wasserrückhaltemittel, vorzugsweise Hydroxypropylmethylcellulose umfaßt.

14. Verwendung einer Zusammensetzung gemäß einem der vorhergehenden Ansprüche zur Bildung bei Wasserzugabe einer abbindungsfähigen Aufschlämmung, die auf ein Stahlstrukturelement aufsprühbar ist, nach der Aufsprühung im Aufschlämmungszustand und dem Abbinden an dem Element haftet, wobei die Aufschlämmung nach dem Abbinden eine gegen Feuer und Hitze schützende, haftende Beschichtung auf dem Element bildet.

15. Aufschlämmung, die durch Zugabe von Wasser zu der Zusammensetzung gemäß einem der Ansprüche 1 bis 13 gebildet worden ist, wobei die Aufschlämmung eine Dichte im Bereich von 35 pcf bis 55 pcf (561 bis 882 kg/m³) aufweist.

16. Aufschlämmung nach Anspruch 15, die nach dem Aufsprühen eine Ausbeute an Ort und Stelle von mindestens etwa 6,1 Plattenmetern pro 20,4 kg der Trockenzusammensetzung ergibt.

17. Feuerfestes Strahlstrukturelement, das ein Stahlstrukturelement umfaßt, das mit einer Aufschlämmung gemäß Anspruch 15 oder Anspruch 16 beschichtet ist.

## Revendications

1. Composition sèche comprenant un liant de ciment hydratable et un agrégat de polystyrène fragmenté, caractérisée en ce que le polystyrène fragmenté a une distribution granulométrique telle qu'environ 0 à environ 20 pour cent en poids des particules sont retenues par un tamis ayant une grandeur des trous d'environ 1,68 mm et un maximum d'environ 40 pour cent en poids des particules passent par un tamis ayant une grandeur des trous d'environ 0,59 mm et sont retenues par un tamis ayant une grandeur des trous d'environ 0,043 mm.

2. Composition selon la revendication 1, où la distribution granulométrique de l'agrégat est telle que moins d'environ 8 pour cent en poids des particules sont retenues par un tamis ayant une grandeur des trous d'environ 1,68 mm.

3. Composition selon la revendication 2, où la distribution granulométrique de l'agrégat est telle que moins d'environ 30 pour cent en poids des particules passent par un tamis ayant une grandeur des trous d'environ 0,59 mm et sont retenues par un tamis ayant une grandeur des trous d'environ 0,043 mm.

4. Composition selon toute revendication précédente, où l'agrégat de polystyrène est formé de perles de polystyrène expansé fragmenté, d'un panneau de perles de polystyrène fragmenté d'un isolement de garnissage en polystyrène fragmenté ou de polystyrène extrudé fragmenté.

5. Composition selon toute revendication précédente, où le polystyrène a une densité comprise entre environ 0,2 et 0,6pcf (3,2 à 9,6 kg/m³).

6. Composition selon toute revendication précédente, comprenant environ 1% à à 5% an poids du polystyrène.

7. Composition selon toute revendication précédente, comprenant de plus un composant fibreux.

8. Composition selon la revendication 7, où le composant fibreux se compose d'une matière fibreuse organique et d'une matière fibreuse inorganique.

9. Composition selon la revendication 7 ou la revendication 8, où le composant fibreux se compose d'une fibre organique à fort gonflant à l'état humide, de préférence de la cellulose.

10. Composition selon l'une quelconque des revendications 7 à 9, où le composant fibreux se compose d'une matière fibreuse inorganique, de préférence de la fibre de verre.

11. Composition selon la revendication 7, comprenant environ 4% à 10% en poids d'une fibre de cellulose à fort gonflant à l'état humide et environ 0 à 2% en poids de fibre de verre.

12. Composition selon toute revendication précédente, comprenant de plus un agent entraînant l'air.

13. Composition selon toute revendication précédente, comprenant de plus un agent retenant l'eau, de préférence de l'hydroxypropylméthylcellulose.

14. Utilisation d'une composition selon toute revendication précédente pour former, lors de l'addition d'eau, une bouillie pouvant prendre qui peut être appliquée au jet à un organe de structure en acier et qui, après application au jet, adhère à l'organe à l'état de bouillie et après prise, ladite bouillie forme un revêtement adhérent, protégeant contre le feu et la chaleur, sur l'organe.

15. Bouillie formée lors de l'addition d'eau à la composition selon l'une quelconque des revendications 1 à 13, ladite bouillie ayant une densité comprise entre 35pcf et 55 pcf (561-882 kg/m³).

16. Bouillie selon la revendication 15 formant, après application au jet, une élasticité en place d'au moins environ 6,1 mètres de panneau pour 20,4 kg de ladite composition sèche.

17. Organe de structure en acier ignifugé comprenant un organe de structure en acier enduit d'une bouillie selon la revendication 15 ou la revendication 16.
